# FASCICULE DE BREVET EUROPEEN

(11) **EP 3 051 316 B1**
(45) Date de publication et mention de la délivrance du brevet: **08.01.2020**
(21) Numéro de dépôt: 16153203.1
(22) Date de dépôt: 28.01.2016
(51) Int. Cl.: G01T 1/17

(54) **CIRCUIT ÉLECTRONIQUE CONFIGURÉ POUR CONTRÔLER UN MODULE D'ACQUISITION D'UN DISPOSITIF DE DÉTECTION DE PHOTONS, MODULE D'ACQUISITION, PROCÉDÉ DE CONTRÔLE, ET PROGRAMME D'ORDINATEUR CORRESPONDANT**
ELEKTRONISCHER SCHALTKREIS, DER ZUR STEUERUNG EINES ERFASSUNGSMODULS EINER PHOTONENDETEKTIONSVORRICHTUNG KONFIGURIERT IST, STEUERVERFAHREN UND ENTSPRECHENDES COMPUTERPROGRAMM
ELECTRONIC CIRCUIT CONFIGURED TO CONTROL AN ACQUISITION MODULE OF A PHOTON DETECTION DEVICE, ACQUISITION MODULE, CONTROL METHOD, AND CORRESPONDING COMPUTER PROGRAM

(30) Priorité: 28.01.2015 FR 1550663
(43) Date de publication de la demande: 03.08.2016
(73) Titulaire: WEEROC, 91140 Villebon-Sur-Yvette (FR)
(72) Inventeur: FLEURY, Julien, 77630 Barbizon (FR); AHMAD, Salleh, 77420 Champs Sur Marne (FR)
(74) Mandataire: Vidon Brevets & Stratégie

(56) Documents cités:
- WO-A1-2014/135465
- WO-A2-2006/111883
- FLEURY J ET AL: "Petiroc, a new front-end ASIC for time of flight application", 2013 IEEE NUCLEAR SCIENCE SYMPOSIUM AND MEDICAL IMAGING CONFERENCE (2013 NSS/MIC), IEEE, 27 octobre 2013 (2013-10-27), pages 1-5, XP032601101, DOI: 10.1109/NSSMIC.2013.6829018

## Description

### 1. Domaine de l'invention

Le domaine de l'invention est celui de la microélectronique et de l'optoélectronique.

Plus précisément, l'invention concerne une technique relative aux dispositifs de détection de photons, également appelés photodétecteurs, comprenant une pluralité de photomultiplicateurs en silicium SiPM utilisés dans de nombreux dispositifs pouvant détecter des paramètres physiques liés aux photons reçus.

L'invention trouve notamment des applications dans le domaine médical (et plus particulièrement dans les dispositifs permettant de réaliser des tomographies par émission de positons (ou positrons), qui sont aussi appelés dispositifs TEP (ou PET, acronyme anglais pour « *Positron Emission Tomography »).*

De tels dispositifs sont des dispositifs d'imagerie médicale permettant de détecter l'activité organique d'un patient.

L'invention a également des applications dans les domaines utilisant des photomultiplicateurs silicium ou des dispositifs assimilables, tels que les télescopes en astronomie.

### 2. Art antérieur

On s'attache plus particulièrement dans la suite de ce document à décrire la problématique existant dans le domaine des photomultiplicateurs en silicium, à laquelle ont été confrontés les inventeurs de la présente demande de brevet. L'invention ne se limite bien sûr pas à ce domaine particulier d'application, mais présente un intérêt pour toute technique d'optimisation du déclenchement d'un système d'acquisition d'un circuit de lecture de photodétecteur à photomultiplicateurs devant faire face à une problématique proche ou similaire.

Un photomultiplicateur correspond à un tube à vide comprenant une photocathode qui, lorsqu'un photon incident entre en contact avec celle-ci, libère, sous l'effet photoélectrique, un électron. Un tel électron est ensuite dirigé vers une succession de dynodes en vue d'être multiplié (via un phénomène d'avalanche) pour pouvoir effectuer des mesures en sortie du photomultiplicateur.

Plus précisément, il est important de pouvoir déterminer précisément à la fois l'instant auquel un photon arrive sur la photocathode (et donc potentiellement d'ordonnancer les photons incidents), ainsi que de quantifier avec précision l'énergie véhiculée par les photons incidents.

En effet, plus on est capable de déterminer avec précision l'instant d'arrivée d'un photon, et plus on est capable de déterminer si deux photons sont arrivés simultanément. Ce critère est crucial, notamment dans le domaine médical où l'on cherche à identifier l'annihilation d'un positon (ou positron) via la détection de deux photons émis simultanément, qui s'échappent d'un patient, via l'utilisation d'au moins deux photomultiplicateurs positionnés à l'opposé l'un de l'autre (on considère que deux photons qui sont arrivés sur des photocathodes de photomultiplicateurs dans une telle configuration, avec un écart de l'ordre de la nanoseconde sont signalés comme étant détectés simultanément et sont alors appairés).

La quantification de l'énergie reçue par un photomultiplicateur a quant à elle un impact sur la qualité des tomographies obtenues via un dispositif TEP (ou PET, acronyme anglais pour « *Positron Emission Tomography*) ou encore tomographe.

Plus la quantification de l'énergie est précise, et plus la qualité des tomographies obtenues est grande. La gamme dynamique caractérise le rapport du signal maximum au signal minimum (souvent le bruit électronique ou le photon unique) et ce rapport est de quelques milliers.

Le domaine de la tomographie actuel recherche des précisions temporelles de quelques dizaines de picosecondes (10⁻¹² s) pour un seuil de déclenchement de quelques photoélectrons et des gammes dynamiques de quelques milliers de photoélectrons. Cette précision temporelle requiert des bandes passantes de l'ordre du GHz et une amplification des plus faibles signaux de l'ordre d'un facteur 10 (20 dB). Ces bandes passantes élevées sont maintenant possibles à puissance raisonnable grâce aux progrès des circuits intégrés (ASICs), en particulier en technologie BiCMOS Silicium Germanium et au progrès des photodétecteurs « solid-state » (ou photomultiplicateur en silicium SiPM (pour « *Silicon photomultipliers* ») ou MPPC (pour « *Multi-Pixel Photon Counter* ») qui ont des résolutions intrinsèques suffisamment bonnes et limitent les inductances parasites.

En particulier, les photomultiplicateurs en silicium SiPM, outre leur précision temporelle (de quelques dizaines de picosecondes) sont capables de mesurer des intensités lumineuses très faibles (possibilité de mesurer les photons un par un).

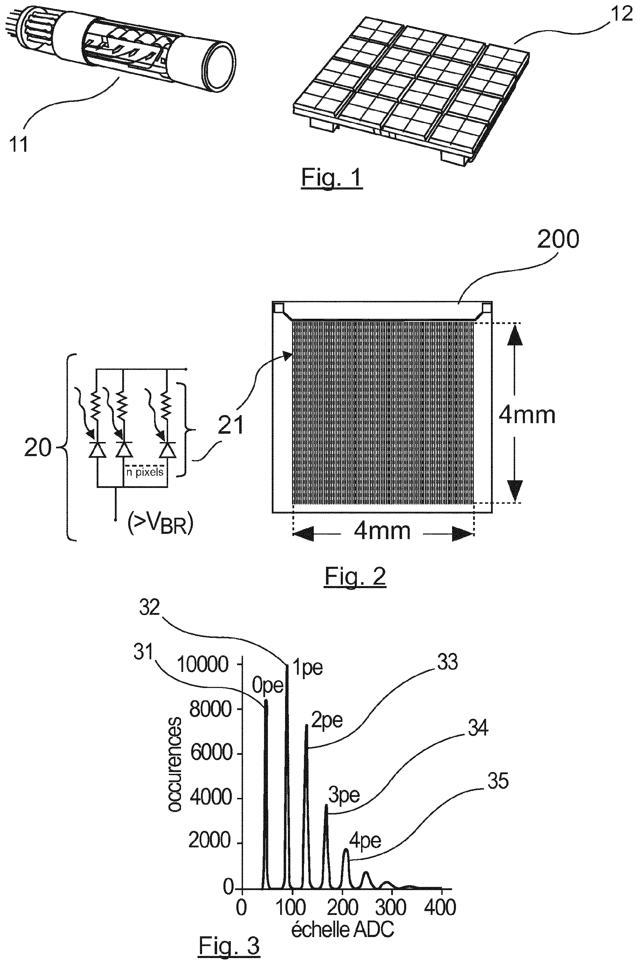

Au regard des photomultiplicateurs antérieurs correspondant à des dispositifs 11 à tube à vide cher et volumineux tels qu'illustrés sur la figure 1, les photomultiplicateurs en silicium SiPM permettent de réduire considérablement l'encombrement des systèmes de détection comme illustré par la matrice de 8x8 photomultiplicateurs en silicium SiPM.

La figure 2 illustre le schéma électrique 20 et la microphotographie 200 d'un photomultiplicateur en silicium SiPM comprenant une pluralité de photodiodes (jusqu'à plusieurs milliers) encore appelées cellules ou pixels 21.

Une telle segmentation en cellules, également appelés pixels 21, permet d'augmenter fortement la granularité et la rapidité des photodétecteurs au regard des photomultiplicateurs antérieurs. En d'autres termes, les « pixels » de lecture du photodétecteur sont plus petits et plus nombreux.

En effet, comme illustré sur la figure 2, un SiPM, correspondant à un carré de 4 mm par 4 mm, comprend environ 1000 pixels.

Lorsqu'un photon touche une cellule, celle-ci claque en créant une charge électrique, communément appelée photoélectron (pe), un temps de recharge de cette cellule est ensuite nécessaire pour être à nouveau opérationnelle.

L'ordre de grandeur de la charge électrique crée est de un million d'électrons par cellule touchée par un photon. En d'autres termes, le gain d'une cellule de photomultiplicateur en silicium SiPM est de 10⁶ électrons/photon.

Ainsi, pour un photomultiplicateur en silicium SiPM comprenant une pluralité de cellules, le gain du SiPM est donc proportionnel au nombre de photons émis (i.e. le SiPM délivre une réponse discrète représentative du nombre de photons émis), et la charge électrique crée correspond à un nombre entier de photoélectrons (pe), ce qui permet de compter un par un le photons qui touchent le photodétecteur, cet aspect étant impossible avec les photomultiplicateurs antérieurs.

La figure 3 illustre notamment la réponse discrète et idéale d'un photomultiplicateur en silicium SiPM sous la forme d'un spectre ADC (ADC de l'anglais « *Analog-to-digital concerter* ») délivrant le nombre d'occurrences de détection de différents événements à savoir : l'émission de bruit (0pe 31), d'un seul photoélectron (1pe 32), de deux photoélectrons crées simultanément (2pe 33), de trois photoélectrons (3pe 34), de quatre photoélectrons (4pe 35) en fonction de la valeur ADC. En d'autres termes la réponse d'un photomultiplicateur est mesurée à un instant précis (par exemple par déclenchement d'un laser émettant quelques photons) ce qui permet de la représenter sous la forme d'un histogramme ou « spectre de photoélectron ».

L'utilisation d'un photomultiplicateur en silicium SiPM offre donc une grande dynamique au regard des photomultiplicateurs antérieurs du fait qu'il est possible de détecter un à quelques milliers de photons.

Toutefois, au regard de la figure 3, il peut être noté que les photodétecteurs à base de photomultiplicateurs en silicium SiPM génèrent du bruit, même en l'absence d'émission de photon (en d'autres termes dans le noir total), ce bruit appelé bruit noir (« *dark noise* » en anglais) correspond au déclenchement intempestif de cellule (également appelé photodiode, ou pixel) sans présence de photon (pic 31).

Par ailleurs, une autre source de bruit est observée dans les TEP en présence d'une émission de photons et correspond à une mauvaise mesure du temps qui conduit à appairer deux photons ne provenant pas de la même désintégration, (notamment en cas de diffusion compton, i.e. la diffusion inélastique de rayonnement d'un photon sur l'électron d'un atome), et donc à créer de « faux » évènements également sources de bruit sur une image finale telle que celle délivrée par un tomographe.

Le fonctionnement optimal d'un photomultiplicateur en silicium SiPM requiert donc un réglage précis du seuil de déclenchement du système d'acquisition du circuit de lecture qui lui est associé. En effet, plus ce seuil de déclenchement est bas plus la mesure de temps sera précise, et plus ce seuil est haut plus la réjection du bruit sera efficace.

Le réglage du seuil de déclenchement permettant une bonne mesure du temps est donc crucial et problématique. En effet, un seuil de déclenchement bas, fournit certes une bonne résolution temporelle de coïncidence (CRT : « *coincidence resolving time* » en anglais), mais est d'une part très sensible au bruit noir issu de chaque photomultiplicateur en silicium SiPM constituant le photodétecteur considéré, et d'autre part associé à un grand nombre de « faux » évènements liés.

Selon les systèmes d'acquisition et de coïncidence de l'art antérieur un tel réglage requiert une numérisation de l'intégralité des évènements apparaissant sur une période prédéterminée, puis une phase de traitement numérique du résultat de cette numérisation et le rejet de « faux » évènements qui ne sont pas dans une fenêtred'énergie prédéterminée au préalable par l'utilisateur, cette fenêtre d'énergie correspondant par exemple aux photons émis par un patient (photons gammas émis par l'annihilation d'un positron) et est de l'ordre de 511Kev par positron.

L'inconvénient de tels systèmes est que l'acquisition est interrompue lors de chaque phase de traitement numérique dont la durée correspond à plusieurs centaines de nanosecondes voire plusieurs microsecondes, si bien qu'un « vrai événement » intervenant pendant cette phase de traitement numérique n'est pas acquis.

Selon cette technique, il apparaît donc que le temps d'interruption relatif à la phase de traitement numérique pour discriminer les « vrais » évènements des « faux événements » va à l'encontre d'une optimisation de la résolution temporelle requise dans des domaines d'applications tels que la tomographie.

Le document de brevet WO 2014/135465 A1 divulgue un dispositif de contrôle de dispositifs de détection de photons. Le document de brevet WO 2006/111883 A2 divulgue un dispositif de traitement des données issues de dispositifs de détection de photons. L'article de J. Fleury et al., « Petiroc, a new front-end ASIC for time of flight application, » 2013 IEEE Nuclear Science Symposium and Medical Imaging Conference, Seoul, pp. 1-5, divulgue un système d'acquisition de données pour dispositifs de détection de photons.

### 1. Objectifs de l'invention

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant une optimisation du déclenchement du système d'acquisition d'un photodétecteur à photomultiplicateurs silicium, en d'autres termes une amélioration de la discrimination entre « bons » et « faux » événements.

En outre, selon au moins un mode de réalisation, un objectif est de fournir une très bonne mesure du temps pour mesure le « temps de vol » des particules (ToF « Time-of-flight » ou Tof en anglais) correspondant à localisation de l'événement sur la droite reliant deux photons correctement appairés.

De plus, au moins un mode de réalisation de l'invention a également pour objectif de fournir une telle technique qui permette à la fois de conserver une grande gamme dynamique (à savoir la détection de un à quelques milliers de photons), une grande efficacité de déclenchement, ainsi que d'obtenir une grande uniformité sur l'ensemble des canaux mis en œuvre.

En outre, dans au moins un mode de réalisation de l'invention, il est proposé une technique n'utilisant que peu de composants électroniques, et minimisant la puissance dissipée, permettant de limiter l'échauffement du photodétecteur situé à proximité immédiate et très sensible à la température.

### 2. Exposé de l'invention

L'invention propose une solution nouvelle qui ne présente pas l'ensemble des inconvénients de l'art antérieur, sous la forme d'un circuit électronique selon la revendication 1.

Ainsi, la présente invention propose un contrôle d'un module d'acquisition de données d'un dispositif de détection de photons en lui transmettant au moins deux informations représentatives de deux ordres numériques d'actions à exécuter, à savoir un premier ordre, dit ordre de déclenchement, qui une fois reçu par le module d'acquisition active le déclenchement de la mémorisation des données mesurées par le dispositif de détection de photon, et un deuxième ordre commandant au module d'acquisition soit une action de traitement de données soit une action de réinitialisation de celui-ci.

La présente invention diffère donc des techniques de l'art antérieur en ce qu'elle propose une discrimination (ou vérification) pour discriminer les « vrais » évènements des « faux évènements », et ce, en vérifiant sur une période prédéterminée que le signal mesuré par le dispositif de détection de photons présente bien un « vrai » événement.

Il est à noter que selon l'invention un « vrai » événement se caractérise par la détection en temps réel d'un niveau d'énergie du signal mesuré simultanément par le dispositif de détection de photons dont la valeur dépasse au moins un seuil d'énergie dit seuil de confirmation.

Par ailleurs, la présente invention propose de limiter le temps de cette vérification en mettant en œuvre un module de mesure du temps qui délivrent un indicateur d'expiration utilisé pour générer l'ordre à exécuter après l'ordre de déclenchement premièrement transmis au module d'acquisition de données du dispositif de détection de photons.

Le temps nécessaire pour la sélection de l'ordre à exécuter par ledit module d'acquisition est donc au maximum égal à la période prédéterminée, préférentiellement d'une durée de quelques nanosecondes, ce qui permet de contrôler le temps d'utilisation dédiée à la discrimination entre « faux » et « vrais » événement, et donc de concentrer le traitement de données uniquement sur les « vrais » événements.

Par ailleurs, un module de détection comprenant un discriminateur d'énergie présentant une gigue inférieure ou égale à 10 ps_{RMS} et un temps de latence inférieur ou égal à 1 ns permet une détection efficace, précise et adaptée à des applications telles que celles mise en œuvre dans le domaine de la tomographie.

Selon un aspect particulier de l'invention, lesdits moyens de génération et de transmission prennent en compte au moins une des règles suivantes :
- génération et transmission d'une première information représentative d'un ordre de déclenchement en présence dudit indicateur de déclenchement,
- génération et transmission d'une deuxième information représentative d'un ordre de traitement de données en présence dudit indicateur de confirmation,
- génération et transmission d'une deuxième information représentative d'un ordre de réinitialisation en présence dudit indicateur d'expiration et en absence dudit indicateur de confirmation.

Ainsi, le module de contrôle du circuit électronique selon l'invention génère automatiquement un ordre de déclenchement en présence d'un indicateur de déclenchement délivré par le module de détection dès que le signal mesuré et mémorisé simultanément par le dispositif d'acquisition dépasse le premier seuil de déclenchement représentatif d'un début d'activité au sein du détecteur de photons.

En outre, le module de contrôle du circuit électronique selon l'invention génère automatiquement un ordre de traitement de données en présence d'un indicateur de confirmation représentatif d'une réelle activité au sein du tomographe.

Cette génération peut être immédiate, c'est-à-dire être effectuée dès qu'un indicateur de confirmation est délivré par le module de détection, ou différée à la fin de la période prédéterminée, c'est-à-cire en présence également de l'indicateur d'expiration de la période prédéterminée.

Avantageusement, le module de contrôle du circuit électronique selon l'invention génère automatiquement un ordre de réinitialisation en présence dudit indicateur d'expiration et en absence dudit indicateur de confirmation.

En d'autres termes, un tel ordre permet d'économiser des ressources mémoires en l'absence d'événement et de passer rapidement, au bout de la période prédéterminée à une phase de discrimination, ce qui évite une monopolisation lourde et coûteuse du module d'acquisition du dispositif de détection de photons.

Un tel circuit, en transmettant de tels ordres numériques , commande donc au module d'acquisition « d'agir » dès que le niveau d'énergie du signal mesuré et mémorisé simultanément par le dispositif d'acquisition dépasse le premier seuil de détection par exemple de l'ordre de 0,7 photoélectron (pe) et d'effacer sa mémoire des données mémorisée pendant la période prédéterminée mesurée par le circuit selon l'invention lorsqu'au bout de cette période le deuxième seuil d'énergie, par exemple de l'ordre de 100 photoélectron n'est pas dépassé ce qui traduit l'absence d'événement significatif au sein du détecteur de photons.

Selon un aspect particulier de l'invention, ledit module de détection comprend en outre un amplificateur et un filtre présentant un temps de montée inférieur ou égal à 50 ns.

Selon un aspect particulier de l'invention, ledit module de mesure du temps comprend un discriminateur de temps réarmable et configuré pour détecter ladite période prédéterminée.

Un tel discriminateur est donc apte à être réinitialisé ou à se réinitialiser seul, une fois la période prédéterminée mesurée et écoulée, afin d'être réutilisé pour chaque discrimination mise en œuvre par l'invention. En outre, un tel discriminateur est apte à être utilisé pour tout type de mesure de temps telle qu'une mesure de temps mettant en œuvre une boucle à verrouillage de retard (DLL de l'anglais *"delay-locked loop"*) ou un convertisseur temps-amplitude (TAC de l'anglais "time-to-amplitude" converter).

Selon un aspect particulier de l'invention, ledit circuit électronique comprend en outre des moyens de réglage de ladite période prédéterminée.

En particulier, lesdits moyens de réglage de ladite période prédéterminée tiennent compte d'au moins une information représentative d'un cristal de scintillation mis en œuvre par ledit dispositif de détection de photons. Cette information représentative correspond par exemple au type (bromure de lantane (LaBR3), orthosilicate de luthetium (LSO), Lutetium-yttrium oxyorthosilicate (Lyso), Iodure de Cesium (CsI)) à la taille ou encore au temps de montée de scintillation du cristal de scintillation utilisé par le détecteur de photons.

Selon un aspect particulier de l'invention, ledit module de mesure de temps comprend en outre un amplificateur configuré pour délivrer une résolution temporelle prédéterminée, par exemple quelques picosecondes.

Selon un aspect particulier de l'invention, ledit module de contrôle, est une machine d'état, ou met en œuvre une logique combinatoire.

L'invention concerne par ailleurs, un module d'acquisition de données d'un dispositif de détection de photons, ledit module d'acquisition étant configuré pour être contrôlé par un circuit électronique tel que décrit précédemment.

En particulier, ledit module d'acquisition comprend :
- des moyens de réception :
   ∘ d'une première information représentative d'un ordre de déclenchement, et
   ∘ d'une deuxième information représentative d'un ordre de traitement de données ou d'un ordre de réinitialisation,
- une mémoire tampon configurée pour stocker des données analogiques pendant une période de temps délimitée par :
   ∘ l'instant de réception dudit ordre de déclenchement, et
   ∘ l'instant de réception dudit ordre de traitement de données ou l'instant de réception dudit ordre de réinitialisation,
   l'instant de réception dudit ordre de déclenchement précédant l'un desdits instants de réception dudit ordre de traitement de données ou dudit ordre de réinitialisation,
- des moyens de traitement de données mettant en œuvre une conversion des données stockées dans ladite mémoire tampon en données numériques lorsque ladite deuxième information reçue par lesdits moyens de réception est représentative d'un ordre de traitement de données,
- des moyens de réinitialisation de ladite mémoire tampon mettant en œuvre une suppression des données analogiques stockées dans ladite mémoire tampon, lorsque ladite deuxième information reçue par lesdits moyens de réception est représentative d'un ordre de réinitialisation.

Un tel module d'acquisition est conçu pour être contrôlé par le circuit électronique précédemment décrit. En particulier, un tel module d'acquisition est apte à recevoir et exécuter les ordres de contrôle transmis par le circuit électronique selon l'invention.

L'invention concerne également un procédé de contrôle selon la revendication 10.

Un tel procédé de contrôle est notamment mis en œuvre par le circuit électronique configuré pour contrôler un module d'acquisition de données d'un dispositif de détection de photons tel que décrit précédemment.

Selon un aspect particulier de ce procédé, ladite génération et transmission prend en compte au moins une des règles suivantes :
- génération et transmission d'une première information représentative d'un ordre de déclenchement en présence dudit indicateur de déclenchement,
- génération et transmission d'une deuxième information représentative d'un ordre de traitement de données en présence dudit indicateur de confirmation,
- génération et transmission d'une deuxième information représentative d'un ordre de réinitialisation en présence dudit indicateur d'expiration et en absence dudit indicateur de confirmation.

Selon un aspect particulier de ce procédé, ladite étape de mesure du temps est mise en œuvre dès que ledit indicateur de déclenchement est délivré.

Ainsi, le procédé de contrôle du circuit électronique selon l'invention génère automatiquement un ordre de déclenchement lorsqu'un événement dans le détecteur de photons semble se produire au sein du détecteur de photons ce qui produit un niveau d'énergie supérieur à un premier seuil prédéterminé. Un tel ordre de déclenchement commande au module d'acquisition de données de déclencher la mémorisation des données relative à l'activité dans le détecteur de photons.

Puis, au fur et à mesure que le temps défile, le module de détection selon l'invention « écoute » le signal mesuré et mémorisé simultanément par le dispositif d'acquisition jusqu'à ce qu'il détecte ou non une augmentation substantielle du niveau d'énergie de ce signal permettant d'identifier un « vrai » événement» et générant dans ce cas un indicateur de confirmation.

En présence d'un tel indicateur de confirmation, le procédé selon l'invention génère alors automatiquement un ordre de traitement de données.

La durée de cette « écoute » est limitée à la période prédéterminée mesurée à partir du moment où le seuil de déclenchement a été détecté, l'étape de mesure de temps délivrant un indicateur d'expiration une fois cette période prédéterminée écoulée.

Une fois cette période prédéterminée expirée (i.e. en présence de l'indicateur d'expiration), si aucun indicateur de confirmation n'a été délivré (i.e. en absence de « vrai » événement, en d'autres termes lorsqu'un niveau substantiel d'énergie du signal mesuré par le dispositif de détection n'a pas été détecté) une réinitialisation du module d'acquisition est décidée lors de l'étape de contrôle et matérialisée par la génération et la transmission d'un ordre de réinitialisation au module d'acquisition.

Selon un aspect particulier de ce procédé, ladite génération et transmission prend en compte au moins une des règles suivantes :
- génération et transmission d'une première information représentative d'un ordre de déclenchement en présence dudit indicateur de déclenchement,
- génération et transmission d'une deuxième information représentative d'un ordre de traitement de données en présence dudit indicateur de confirmation,
- génération et transmission d'une deuxième information représentative d'un ordre de réinitialisation en présence dudit indicateur d'expiration et en absence dudit indicateur de confirmation.

Selon un aspect particulier de ce procédé, ladite étape de mesure du temps est mise en œuvre dès que ledit indicateur de déclenchement est délivré.

Ainsi, le procédé de contrôle du circuit électronique selon l'invention génère automatiquement un ordre de déclenchement lorsqu'un événement dans le détecteur de photons semble se produire au sein du détecteur de photons ce qui produit un niveau d'énergie supérieur à un premier seuil prédéterminé. Un tel ordre de déclenchement commande au module d'acquisition de données de déclencher la mémorisation des données relative à l'activité dans le détecteur de photons.

Puis, au fur et à mesure que le temps défile, le module de détection selon l'invention « écoute » le signal mesuré et mémorisé simultanément par le dispositif d'acquisition jusqu'à ce qu'il détecte ou non une augmentation substantielle du niveau d'énergie de ce signal permettant d'identifier un « vrai » événement » et générant dans ce cas un indicateur de confirmation.

En présence d'un tel indicateur de confirmation, le procédé selon l'invention génère alors automatiquement un ordre de traitement de données.

La durée de cette « écoute » est limitée à la période prédéterminée mesurée à partir du moment où le seuil de déclenchement a été détecté, l'étape de mesure de temps délivrant un indicateur d'expiration une fois cette période prédéterminée écoulée.

Une fois cette période prédéterminée expirée (i.e. en présence de l'indicateur d'expiration), si aucun indicateur de confirmation n'a été délivré (i.e. en absence de « vrai » événement, en d'autres termes lorsqu'un niveau substantiel d'énergie du signal mesuré par le dispositif de détection n'a pas été détecté) une réinitialisation du module d'acquisition est décidée lors de l'étape de contrôle et matérialisée par la génération et la transmission d'un ordre de réinitialisation au module d'acquisition.

Selon un aspect particulier de ce procédé, ladite étape de mesure de temps comprend une étape préalable de réglage de ladite période prédéterminée.

L'invention se rapporte également à un programme d'ordinateur comportant des instructions de code de programme pour l'exécution des étapes du procédé de contrôle décrit lorsque ledit programme est exécuté par un ordinateur.

### 5. Listes des figures

D'autres caractéristiques et avantages de l'invention apparaîtront à la lecture de la description suivante, donnée à titre d'exemple indicatif et non limitatif, et des dessins annexés, dans lesquels :
- la figure 1, déjà présentée en relation avec l'art antérieur, présente un des photomultiplicateurs antérieurs correspondant à des dispositifs à tube à vide ;
- la figure 2, déjà présentée en relation avec l'art antérieur, illustre le schéma électrique et la microphotographie d'un photomultiplicateur en silicium SiPM comprenant une pluralité de photodiodes ;
- la figure 3, déjà présentée en relation avec l'art antérieur, illustre la réponse discrète et idéale d'un photomultiplicateur en silicium SiPM ;
- la figure 4 présente la topologie générale d'un circuit électronique de contrôle selon l'invention ;
- la figure 5 présente la topologie générale d'un module d'acquisition selon l'invention ;
- les figures 6A et 6B illustrent deux exemples d'architectures électroniques d'un dispositif de détection de photons comprenant à la fois ledit circuit électronique et ledit module d'acquisition,
- les figures 7A à 7C illustrent différents aspects d'une application de dispositif de détection de photons;
- la figure 8A et 8B illustrent schématiquement ou sous la forme d'un digramme d'état les étapes du procédé de calibration selon un mode de réalisation de l'invention.

### 6. Description d'un mode de réalisation de l'invention

### 6.1 Principe général

Le principe général de l'invention repose sur un contrôle d'un module d'acquisition de données d'un dispositif de détection de photons mettant en œuvre la détection d'au moins deux seuils d'énergie, l'un très faible (de l'ordre de quelque photoélectrons) permettant l'obtention d'une résolution temporelle optimale, et l'autre élevé représentatif de l'apparition d'un événement significatif (et non du bruit) au sein du tomographe, et sur une mesure de temps permettant de limiter, à une période réglable, le temps de détection du au moins deuxième seuil d'énergie.

Pendant cette période réglable, la mémoire tampon (en anglais « buffer ») du module d'acquisition de données mémorise temporairement les données analogiques relatives au signal mesuré en temps réel par le dispositif de détection de photons.

Si, durant cette période réglable, le circuit électronique selon l'invention détecte, au sein du signal mesuré en temps réel par le dispositif de détection de photons, ledit au moins deuxième seuil d'énergie, alors le circuit électronique selon l'invention commande au module d'acquisition du dispositif de détection de photons le déclenchement du traitement numérique des données mémorisées temporairement. En effet, la détection dudit au moins deuxième seuil d'énergie est représentative de la présence d'un « vrai événement » au sein du dispositif de détection de photons.

Au contraire, si durant la période réglable aucune augmentation substantielle de l'énergie du signal n'est détectée en temps réel, le module de contrôle du circuit électronique selon l'invention considère alors que les données analogiques temporairement mémorisée au sein de la mémoire tampon sont représentative d'un « faux événement » et commande en conséquence la réinitialisation de celle-ci, en d'autres termes la suppression des données analogiques temporairement mémorisées.

Ainsi, le circuit électronique selon la présente invention permet une discrimination des évènements qui ont lieu en temps réel au sein du dispositif de détection de photons, et ce, sur un temps limité à la période réglable de l'ordre de quelques dizaines de nanosecondes, ce qui représente une évolution significative au regard de l'état de l'art qui met en œuvre une discrimination numérique après traitement numérique des données mesurées, engendrant en conséquence un temps mort dans l'acquisition de données égale à plusieurs centaines de nanosecondes voire plusieurs microsecondes.

L'invention permet donc au minimum une division par dix du temps mort relatif à la discrimination entre « vrais et faux événements » au regard de l'état de l'art, et en conséquence une augmentation de la sensibilité générale du système.

La présente invention permet donc de déclencher le système d'acquisition d'un circuit de lecture d'un dispositif de détection de photons avec une résolution temporelle optimale (premier seuil de détection bas) tout en garantissant une bonne réjection du bruit (dû au « courant noir » (« dark current » en anglais) par exemple dans un photomultiplicateur en silicium SiPm du dispositif de détection de photons ou à la diffusion Compton du cristal mis en œuvre dans ce dispositif de détection de photons.)

### 6.2 Topologie générale d'un circuit électronique de contrôle

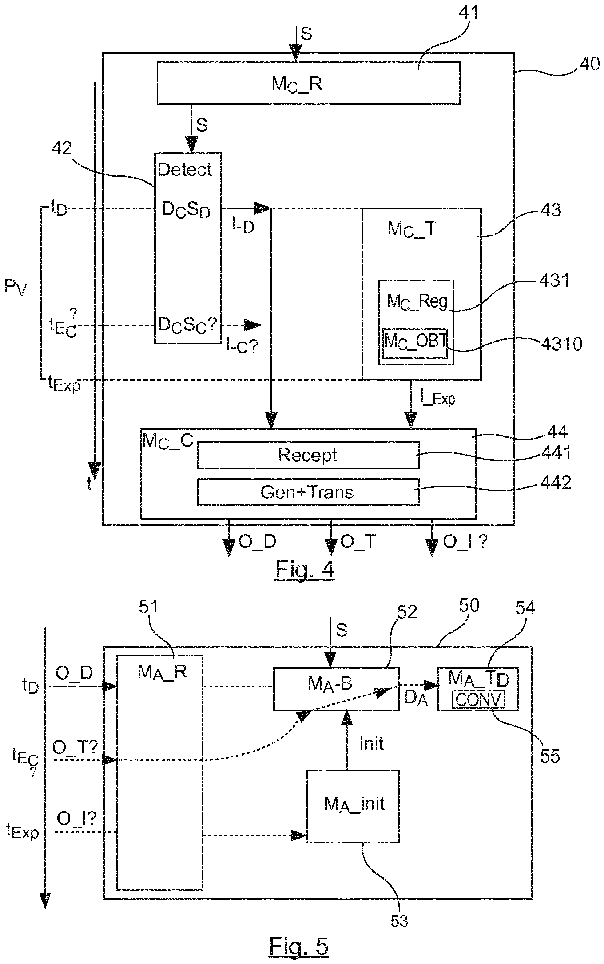

On présente en relation avec la figure 4, la structure générale du circuit électronique (40) proposé selon l'invention.

Selon l'invention, le circuit électronique (40) configuré pour contrôler un module d'acquisition (50) de données d'un dispositif de détection de photons représenté par la figure 5 décrite en détail ci-après, comprend tout d'abord un module de réception *M_{c_}R* (41) d'un signal S mesuré par ledit dispositif de détection de photons.

Ainsi, le circuit électronique selon l'invention reçoit en temps réel le signal mesuré simultanément par le dispositif de détection de photons.

Par ailleurs, le circuit électronique (40) proposé selon l'invention comprend un module de détection (42) d'au moins un seuil d'énergie parmi au moins deux seuils d'énergie dudit signal, dits seuil de déclenchement et seuil de confirmation respectivement, ledit seuil de confirmation étant strictement supérieur audit seuil de déclenchement, ledit module de détection délivrant :
∘ un indicateur de déclenchement *I__{D},* en cas de détection D_{C}S_{D} dudit seuil de déclenchement, et
∘ un indicateur de confirmation *I__{C},* en cas de détection D_{C}S_{C} dudit seuil de confirmation.

Un tel module de détection ou détecteur (42) est donc apte à détecter, en temps réel, au moins le dépassement d'un premier seuil d'énergie dit « seuil bas », par exemple de 0,7 photons électrons par le signal mesuré simultanément par le dispositif de détection de photons.

Une telle détection à un instant t_{D} délivre un indicateur de déclenchement *I__{D}* en entrée d'un module de contrôle *M_{c}_C* (44) du circuit électronique (40) selon l'invention.

Le module de contrôle *M_{c}_C* (44) comprend des moyens de réception (441) de l'indicateur de déclenchement *I__{D}.* Une fois un tel indicateur de déclenchement *I__{D}* réceptionné, des moyens de génération et de transmission (442) de ce module de contrôle *M_{c}_C* (44) génèrent et transmettent un ordre de déclenchement O_A_D au module d'acquisition (50) du dispositif de détection de photons. Un tel ordre de déclenchement O_A_D vise notamment à déclencher, au sein du module d'acquisition, la mémorisation en temps réel des données (énergétiques et temporelles) relatives au signal mesuré par le dispositif de détection de photons.

Par ailleurs, le circuit électronique (40) proposé selon l'invention comprend un module de mesure du temps (43) délivrant un indicateur d'expiration *I_{EXP}* lorsqu'une période P_{V} prédéterminée est écoulée à un instant *t_{Exp}* telle que *P_{V}* = [*t_{D}*; *t_{Exp}*].

Un tel module de mesure de temps (43) sont notamment activés ou réinitialisés à l'instant t_{D} correspondant à la détection du dépassement du premier seuil d'énergie par le signal S mesuré par le dispositif de détection de photons.

Puis, pendant la période P_{V}, les moyens de détection du circuit électronique selon la présente invention « écoutent » en temps réel le signal mesuré au sein du dispositif de détection de photons afin de détecter ou non le dépassement d'au moins un deuxième seuil d'énergie significatif, par exemple de l'ordre de 100 photoélectrons (pe), attestant de la production d'un « vrai événement » au sein du dispositif de détection de photons.

Si un tel dépassement est détecté D_{C}S_{C} à un instant t_{EC}, tel que *t_{EC}* ∈ *P_{V},* alors un indicateur de confirmation *I__{C}* est délivré en entrée du module de contrôle *M_{c}_C* (44).

Un tel indicateur de confirmation *I__{C}* est réceptionné par les moyens de réception (441) du module de contrôle *M_{c}_C* (44). Une fois un tel indicateur de confirmation *I__{C}* réceptionné, des moyens de génération et de transmission (442) de ce module de contrôle *M_{c}_C* (44) génèrent et transmettent un ordre de traitement de données *O_A_T* au module d'acquisition (50) du dispositif de détection de photons. Un tel ordre de traitement de données *O_A_T* vise notamment à déclencher au sein du module d'acquisition le traitement de données mettant en œuvre une conversion des données analogiques stockées temporairement dans ladite mémoire tampon en données numériques (temporelles et d'amplitude énergétique).

En revanche, si aucun dépassement du seuil de confirmation n'est détecté par le module de détection (42) sur la période prédéterminée *P_{V}* aucun indicateur supplémentaire n'est délivré par les moyens de détection (42) en entrée du module de contrôle *M_{c}_C* (44) du circuit électronique selon l'invention, alors qu'en parallèle une fois la période prédéterminée *P_{V}* expirée le module de mesure de temps délivrent l'indicateur d'expiration *I_{EXP}* lorsqu'une période P_{V} prédéterminée est écoulée.

Un tel indicateur d'expiration *I_{EXP}* est réceptionné par les moyens de réception (441) du module de contrôle *M_{c}_C* (44).

De ce fait, en présence dudit indicateur d'expiration *I_{EXP}* et en absence dudit indicateur de confirmation *I__{C},* les moyens de génération et de transmission (442) du module de contrôle *M_{c}_C* (44) du circuit électronique selon l'invention transmettent au module d'acquisition un ordre de réinitialisation *O_A_I.* Un tel ordre de réinitialisation *O_A_I* vise notamment à déclencher au sein du module d'acquisition la suppression des données analogiques stockées temporairement dans ladite mémoire tampon, si bien que le module d'acquisition (50) du dispositif de détection de photons est prêt pour une nouvelle acquisition.

Pour résumer, les moyens de génération et de transmission (442) du le module de contrôle *M_{c}_C* (44) du circuit électronique (40) selon l'invention prend donc en compte au moins une des règles suivantes :
- génération et transmission d'une première information représentative d'un ordre de déclenchement en présence dudit indicateur de déclenchement,
- génération et transmission d'une deuxième information représentative d'un ordre de traitement de données en présence dudit indicateur de confirmation,
- génération et transmission d'une deuxième information représentative d'un ordre de réinitialisation en présence dudit indicateur d'expiration et en absence dudit indicateur de confirmation.

Pour prendre en compte de telles règles module de contrôle *M_{c}_C* (44) du circuit électronique (40) est une machine d'état mettant en œuvre un procédé dont le diagramme d'état sera détaillé par la suite en relation avec la 8B, ou met en œuvre une logique combinatoire.

Selon la variante du circuit électronique selon l'invention telle que représentée sur la figure 4, ledit module de mesure du temps (43) comprend en outre des moyens de réglage *M_{c}_Reg* (431) de ladite période P_{V} prédéterminée.

En outre, selon un aspect particulier de cette variante, lesdits moyens de réglage (431) de ladite période prédéterminée mettent en œuvre des moyens d'obtention *M_{c}_OBT* (4310) et de traitement d'au moins une information représentative d'un cristal de scintillation mis en œuvre par ledit dispositif de détection de photons.

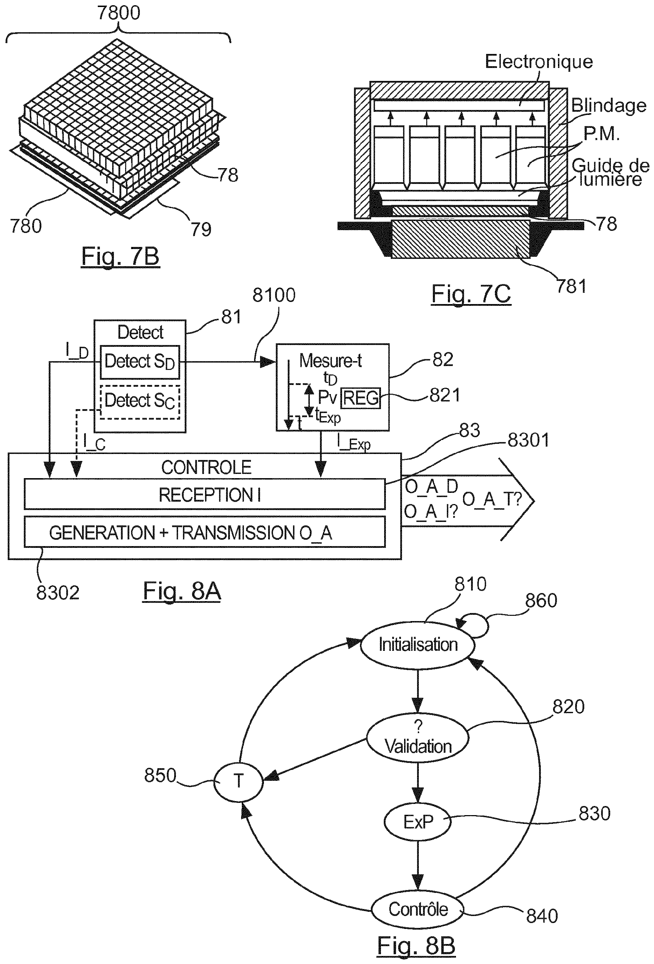

En effet, pour certaines applications, notamment dans le domaine de l'imagerie médicale, le dispositif de détections de photons tel qu'illustré par les figures 7B et 7C met en œuvre un cristal de scintillation.

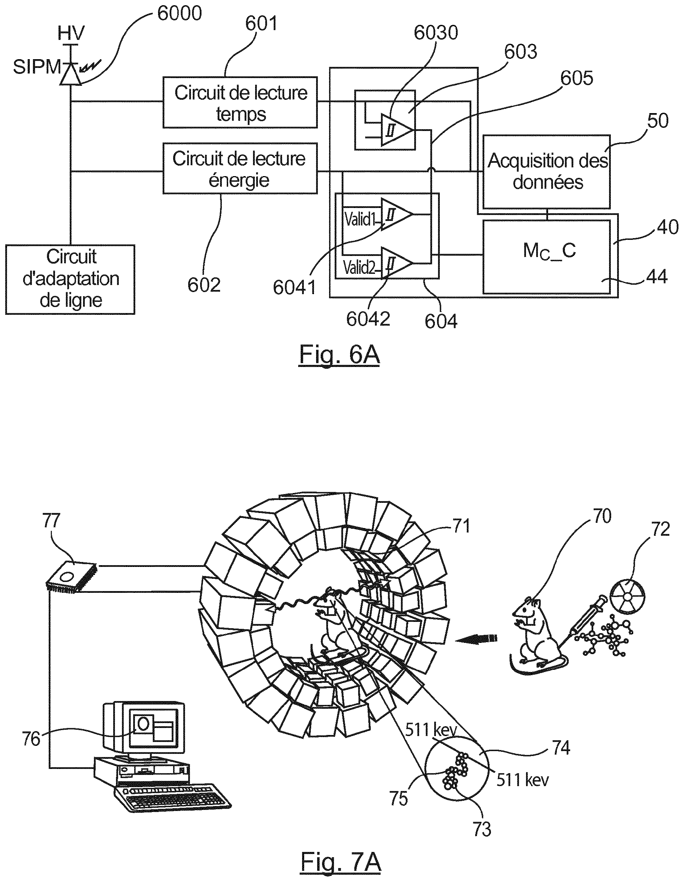

La figure 7A illustre une application en cancérologie, en neurologie et en cardiologie d'un dispositif de détection de photons, appelé tomographe, comprenant des photomultiplicateurs 71 en silicium utilisés pour détecter l'activité organique d'un patient 70.

Plus précisément, le principe de tels dispositifs consiste à injecter au patient une substance 72 radioactive glucosée, appelée traceur, qui sera absorbée par les organes en activité. En effet, plus un organe est actif, plus il consomme de glucose et devient en conséquence radioactif.

Lors de la désintégration d'un atome radioactif 73, un positron 75 (ou positon) est émis et interagit presque immédiatement avec un électron 74, puis le couple électron-positron se désintègre en deux photons gamma de 511Kev émis simultanément « dos à dos ».

Les détecteurs 71 placés en anneau mesurent l'énergie et le temps d'arrivée des photons gamma.

Seuls les photons gamma de 511Kev sont retenus et un système de coïncidence 77 appaire les photons gamma provenant d'une même désintégration.

Puis, une algorithme mis en œuvre par un ordinateur 76 utilise l'ensemble des droites crées par l'appairage des photons et reconstruit l'image de l'activité organique du sujet 70.

La détection de photons gamma est notamment mise en œuvre par une gamma caméra 7800 représentée par les figures 7B et 7C.

Les photons gamma ont une faible probabilité d'interaction avec la matière. Une grande quantité de matière de détection est donc nécessaire pour avoir une interaction entre le photon gamma et cette matière de détection et permettre au photon gamma de sortir du sujet 70 sans interagir avec autre chose que ladite matière de détection.

En particulier, la gamma caméra 7800 optimisée de sorte à fournir une probabilité maximum d'interaction d'un photon gamma avec la matière qu'elle contient, comprend :
- un absorbeur transparent, également appelé cristal de scintillation 78,
- un photodétecteur 780 (par exemple un photomultiplicateur (et préférentiellement un photomultiplicateur en silicium), ou encore une photodiode à avalanche) et,
- un module électronique d'acquisition mesurant notamment le temps d'arrivée du photon dans le dispositif et son énergie.

Pour l'application de tomographie précédemment décrite, les deux informations issues de la gamma caméra (temps et énergie) sont ensuite transmises à une électronique de détection de coïncidence qui permettra d'appairer les deux photons gamma issus d'une même désintégration de positron, ce qui donnera pour chaque paire reconstruite une droite permettant de recréer l'image de l'activité organique du sujet.

Dans le cas de la tomographie d'émission monophotonique (TEMP) dite aussi SPECT (de l'anglais : Single photon emission computed tomography) un seul des deux photons gamma issus d'une même désintégration de positron est utilisé. Il est alors nécessaire de limiter l'angle de vue de la gamma caméra. On ajoute alors un collimateur 781 devant le cristal 78 tels qu'illustrés sur la figure 7C, les photons n'arrivant pas avec un angle d'incidence inclut dans l'angle de vue de la caméra sont arrêtés par le collimateur.

Les caméras SPECT ont donc une efficacité bien plus faible que les caméras TEP car seul un petit nombre de photons gammas ceux qui sont émis avec un angle compatible avec l'angle de vue de la caméra sont détectés.

Il existe plusieurs types de cristaux pour la détection de photons gamma, (bromure de lantane (LaBR3), orthosilicate de luthetium (LSO), Lutetium-yttrium oxyorthosilicate (Lyso), lodure de Césium (Csl)).

Lors d'une interaction d'un photon gamma avec un cristal, la génération de photons visibles détectés par le photodétecteur met un certain temps, appelé temps de montée de scintillation (en anglais « *rise time* »), avant d'atteindre un maximum de luminosité, puis tends vers zéro (en anglais « *decay time »).*

Selon l'invention, l'information représentative d'un cristal de scintillation reçue par les moyens d'obtention *M_{c}_OBT* (4310) et de traitement des moyens de réglage *M_{c}_Reg* (431) de ladite période prédéterminée correspond par exemple au type, à la taille ou encore au temps de montée de scintillation du cristal de scintillation utilisé par le détecteur de photons.

Par exemple, pour un cristal de bromure de lantane (LaBR3) : la période prédéterminée *P_{V}* est telle que *P_{V}* = 5*ns*, pour un cristal d'orthosilicate de luthetium (LSO) : la période prédéterminée *P_{V}* est telle que *P_{V}* = 15*ns*, pour un cristal de Lutetium-yttrium oxyorthosilicate (Lyso): la période prédéterminée *P_{V}* est telle que *P_{V}* = 10*ns*.

### 6.3 Topologie générale d'un module d'acquisition

On présente en relation avec la figure 5 la structure générale du module d'acquisition (50) proposé selon l'invention, configuré pour être commandé par le circuit électronique de contrôle précédemment décrit.

Plus précisément, un tel module d'acquisition comprend :
- des moyens de réception *M_{A}*_*R* (51) :
   ▪ d'une première information représentative d'un ordre de déclenchement 0_D, et
   ▪ d'une deuxième information représentative d'un ordre 0_T de traitement de données ou d'un ordre 0_I de réinitialisation,
- une mémoire tampon *M_{A}*_*B* (52) (« *buffer* » en anglais) configurée pour stocker des données analogiques pendant une période de temps délimitée par :
   ∘ l'instant t_{D} de réception dudit ordre 0_D de déclenchement, et
   ∘ l'instant t_{EC} de réception dudit ordre 0_T de traitement de données ou l'instant *t_{Exp}* de réception dudit ordre 0_I de réinitialisation,
   l'instant t_{D} de réception dudit ordre 0_D de déclenchement précédant l'un desdits instants t_{EC} ou *t_{Exp}* de réception dudit ordre 0_T de traitement de données ou dudit ordre 0_I de réinitialisation,
- des moyens de traitement *M_{A}*_*T_{D}* (54) de données mettant en œuvre une conversion CONV (55) des données analogiques stockées dans ladite mémoire tampon en données numériques lorsque ladite deuxième information reçue par lesdits moyens de réception est représentative d'un ordre 0_A_T de traitement de données,
- des moyens de réinitialisation *M_{A}_init* (53) de ladite mémoire tampon mettant en œuvre une suppression des données analogiques stockées dans ladite mémoire tampon, lorsque ladite deuxième information reçue par lesdits moyens de réception est représentative d'un ordre de réinitialisation.

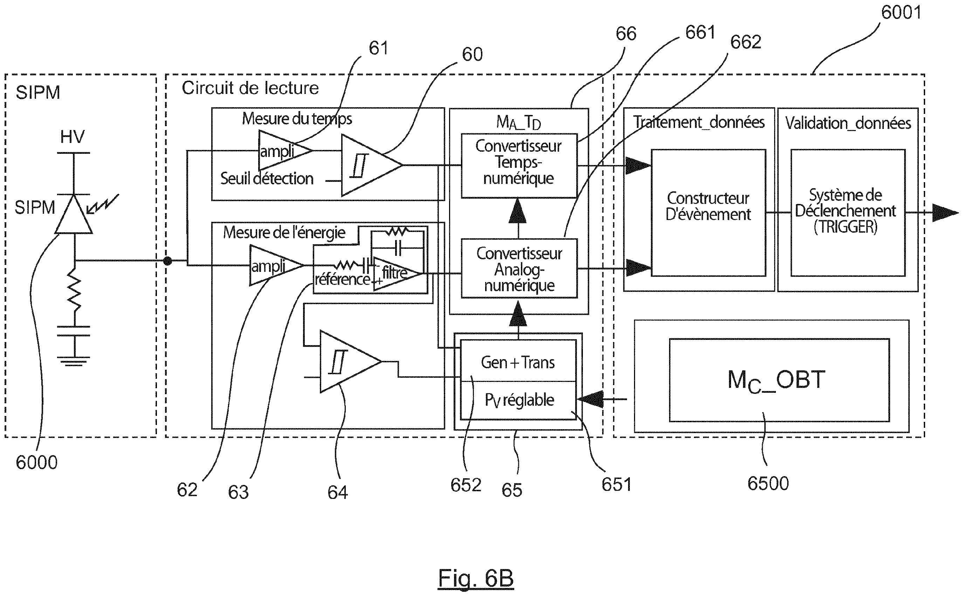

Il est à noter que selon l'exemple représenté sur la figure 5, on considère que les instants t_{D} ou t_{EC} ou *t_{Exp}* d'émission d'ordres au sein du circuit électronique tel que décrit précédemment au regard de la figure 4, correspondent exactement aux instants de réception de ces mêmes ordres au sein du module d'acquisition décrit en relation avec la présente figure 5, ce qui est notamment le cas au regard des deux exemples d'architectures électroniques d'un dispositif de détection de photons comprenant à la fois ledit circuit électronique et ledit module d'acquisition tel qu'illustré sur les figures 6A et 6B décrites ci-après.

Le module d'acquisition (50) de la figure 5 comprend donc des éléments spécifiques, à savoir des moyens de réception *M_{A}_R* (51), une mémoire tampon *M_{A}_B* (52), des moyens de traitement *M_{A}*_*T_{D}* (54), et des moyens de réinitialisation *M_{A}_init* (53) contrôlés par les ordres numériques émis par le circuit électronique de contrôle précédemment décrit en relation avec la figure 4.

### 6.4 Exemples d'architectures électroniques d'un dispositif de détection de photons comprenant à la fois ledit circuit électronique et ledit module d'acquisition

On présente en relation avec les figures 6A et 6B deux exemples d'architectures électroniques d'un dispositif de détection de photons comprenant à la fois le circuit électronique (40) de contrôle de module d'acquisition selon l'invention, dont la structure générale est illustrée par la figure 4 et le module d'acquisition (50) correspondant dont la structure générale est illustrée par la figure 5.

Ces deux dispositifs de détection de photons comprennent une pluralité de photomultiplicateurs (6000) en silicium SiPM, chaque photomultiplicateurs en silicium SiPM étant connecté à une pluralité de circuits de mesure à savoir : un circuit de lecture temps (601), un circuit de lecture d'énergie (602), le circuit électronique (40) de contrôle de module d'acquisition selon l'invention, et le module d'acquisition (50) correspondant.

Plus précisément, selon le mode de réalisation de la figure 6A, le module de mesure du temps 603 est directement relié au circuit de lecture de temps des données analogiques délivrées par le SiPM, ce circuit le lecture de temps permettant d'associer à chaque instant mesuré en temps réel, un niveau d'amplitude énergétique du signal, comprend un discriminateur 6030 qui permet un réarmement lorsque la période prédéterminée P_{V} est écoulée à un instant *t_{Exp}.*

Par ailleurs, le module de détection (604) détectant au moins deux seuils d'énergie du signal mesuré au sein du dispositif de détection de photons comprend, selon l'exemple illustré par la figure 6A, au moins deux discriminateurs 6041 et 6042, le premier discriminateur 6041 détectant un premier seuil Valid 1, dit seuil de déclenchement, et le deuxième discriminateur 6042 détectant un deuxième seuil Valid 2, dit seuil de confirmation, ledit seuil de confirmation Valid 2 étant strictement supérieur audit seuil de déclenchement Valid 1.

Selon cet exemple, il peut être noté que les sorties des deux discriminateurs de détection de niveaux d'énergie sont reliés au discriminateur 6030 du module de mesure de temps 603.

En particulier, lorsque le seuil de déclenchement Valid 1 est détecté par le premier discriminateur 6041, l'indicateur de déclenchement *I__{D}* est envoyé (605) par le module de détection 604 à la fois en entrée du module de contrôle (44) et également en entrée du discriminateur 6030 du module de mesure de temps 603, ce qui déclenche à l'instant de déclenchement t_{D} la mesure de temps de la période P_{V}.

Puis, si le dépassement du seuil Valid 2 est détectée par le deuxième discriminateur 6042 l'indicateur de confirmation *I__{c}* est envoyé (605) par le module de détection 604 à la fois en entrée du module de contrôle (44) et également en entrée du discriminateur 6030 du module de mesure de temps 603, ce qui stoppe la mesure de temps et commande le réarmement automatique discriminateur 6030 du module de mesure de temps 603.

En revanche, si aucun dépassement du seuil Valid 2 n'est détecté sur la période P_{V}, le discriminateur 6030 du module de mesure de temps 603 transmet (via le câble 605) indicateur d'expiration *I_{Exp}* en entrée du module de contrôle (44).

La figure 6B présente une architecture différente de la figure 6A où les différents éléments constitutifs du circuit électronique de contrôle selon l'invention sont connectés respectivement à différents éléments du circuit de lecture (à savoir un module de mesure de temps, un module de mesure d'énergie) ou d'un module d'analyse d'événement 6001.

Plus précisément, le module de détection du circuit électronique de contrôle selon l'invention comprend un discriminateur d'énergie (64), par exemple à double seuils (i.e. apte à détecter les deux seuils Validl et Valid2) de la figure 6A présentant une gigue inférieure ou égale à 10 ps_{RMS} et un temps de latence inférieur ou égal à 1 ns.

De telles caractéristiques techniques du module de détection permettent en effet une détection efficace, précise et adaptée à des applications telles que celles mise en œuvre dans le domaine de la tomographie.

Par ailleurs, selon l'exemple de la figure 6B, le module de détection comprend en outre un amplificateur (62) et un filtre (63) présentant un temps de montée inférieur ou égal à 50 ns.

Au regard du module de mesure de temps du circuit électronique de contrôle selon l'invention, celui-ci est directement relié au circuit de mesure de temps du signal du dispositif de détection de photon, et comprend un discriminateur 60 tel que détaillé précédemment au regard de la figure 6A, et en outre un amplificateur (61) configuré pour délivrer une résolution temporelle prédéterminée.

Le module de contrôle (65) du circuit électronique de contrôle selon l'invention comprend des moyens de réception (non représentés) des indicateurs délivrés par le discriminateur (60) du module de mesure de temps ou par le discriminateur d'énergie (64) du module de détection et des moyens de génération et de transmission (652) d'ordres de contrôle destinés aux moyens de traitement *M_{A}*_*T_{D}* (66) du module d'acquisition du dispositif de détection de photons.

Plus précisément, ces moyens de traitement *M_{A}*_*T_{D}* (66) coopèrent avec la mémoire tampon (non représentée) stockant en temps réel les données analogiques délivrées par chaque SiPM.

Ces moyens de traitement *M_{A}*_*T_{D}* (66) comprennent notamment un convertisseur (661) de données analogiques temporelles en données numériques temporelles et un convertisseur (662) de données analogiques d'amplitude énergétique en données numériques d'amplitude énergétique, les données numériques délivrées étant ensuite analysées par le module d'analyse d'événement 6001 du dispositif de détection de photons.

Selon l'exemple de la figure 6B, il est à noter que les moyens de réglage (651) de ladite période P_{V} prédéterminée du module de temps selon la figure 4 sont localisés au sein du module de contrôle (65) du circuit électronique de contrôle.

En outre, selon un aspect particulier de cette variante, les moyens d'obtention *M_{c}_OBT* et de traitement (6500) d'au moins une information représentative d'un cristal de scintillation mis en œuvre par ledit dispositif de détection de photons sont localisés au sein module d'analyse d'événement 6001 du dispositif de détection de photons où cette information peut également être utilisée pour cette analyse.

### 6.5 Procédé de contrôle d'un module d'acquisition

On présente en relation avec la figure 8, le procédé (80) de contrôle mis en œuvre par le circuit électronique selon l'invention précédemment décrit en relation avec la figure 4, et comprenant un module de réception d'un signal mesuré par ledit dispositif de détection de photons.

Plus précisément, ce procédé de contrôle comprend :
- au moins une étape de détection (81) d'au moins un seuil d'énergie parmi au moins deux seuils d'énergie dudit signal, dits seuil de déclenchement et seuil de confirmation respectivement, ledit seuil de confirmation étant strictement supérieur audit seuil de déclenchement, ladite étape de détection délivrant :
   ∘ un indicateur de déclenchement *I__{D},* en cas de détection dudit seuil de déclenchement, et
   ∘ un indicateur de confirmation *I__{C},* en cas de détection dudit seuil de confirmation,
- une étape de mesure du temps (82) délivrant un indicateur d'expiration *I__{EXP}* lorsqu'une période prédéterminée est écoulée,
- une étape de contrôle (83) comprenant :
   ∘ la réception (8301) dudit indicateur de déclenchement et d'au moins un desdits indicateurs de confirmation ou d'expiration,
   ∘ la génération et la transmission (8302) audit module d'acquisition :
      ▪ d'une première information représentative d'un ordre de déclenchement, et
      ▪ d'une deuxième information représentative d'un ordre de traitement de données ou d'un ordre de réinitialisation,
      lesdites première et deuxième informations étant générées en fonction desdits indicateurs reçus lors de ladite réception.

En particulier, la génération et transmission (8302) prend en compte au moins une des règles suivantes :
- génération et transmission d'une première information représentative d'un ordre de déclenchement en présence dudit indicateur de déclenchement,
- génération et transmission d'une deuxième information représentative d'un ordre de traitement de données en présence dudit indicateur de confirmation,
- génération et transmission d'une deuxième information représentative d'un ordre de réinitialisation en présence dudit indicateur d'expiration et en absence dudit indicateur de confirmation.

Plus précisément, l'étape de mesure du temps (82) est mise en œuvre (8100) dès que l'indicateur de déclenchement *I__{D}* est délivré et comprend une étape préalable de réglage (821) de ladite période prédéterminée.

Un tel procédé correspond donc aux différentes étapes mises en œuvre par les différents composants du circuit électronique de contrôle décrit précédemment au regard de la figure 4, et précise comment ces différents composants coopèrent les uns avec les autres.

La figure 8B illustre en outre le diagramme d'état mis en œuvre par le module de contrôle (44) lorsque ce module est une machine d'état. En fonction de la qualité de l'événement qui se produit au sein du dispositif de détection de photons, à savoir « vrai événement » ou « faux évènement », la machine d'état passe par les états suivants : Initialisation 810 puis Validation 820 (lorsque le dépassement du deuxième seuil d'énergie est détecté ce qui est représentatif d'un « vrai événement »).

En cas de validation, le module de contrôle transmet T 850 immédiatement un ordre de traitement de données, et le traitement données analogiques par conversion en données numériques libérant la mémoire tampon (52) du module d'acquisition (50) qui revient également à un état d'initialisation en même temps que le module de contrôle du circuit électronique selon l'invention.

En l'absence de validation, le détecteur (42) continue cependant à écouter en temps réel le signal qui est mesuré par le dispositif de détection de photons jusqu'à l'état EXP d'expiration 830 puis de contrôle 840 qui vérifie l'absence d'événement significatif et transmet T 850 alors une ordre de réinitialisation par suppression (860) de données de la mémoire tampon (52) du module d'acquisition (50) qui revient également à un état d'initialisation en même temps que le module de contrôle du circuit électronique selon l'invention.

## Revendications

1. Circuit électronique configuré pour contrôler un module d'acquisition de données d'un dispositif de détection de photons,
ledit circuit électronique comprenant un module de réception (41) d'un signal mesuré par ledit dispositif de détection de photons, qui comprend en outre :
- un module de détection (42) d'au moins un seuil d'énergie parmi au moins deux seuils d'énergie dudit signal, dits seuil de déclenchement et seuil de confirmation respectivement, ledit seuil de confirmation étant strictement supérieur audit seuil de déclenchement, ledit module de détection délivrant :
∘ un indicateur de déclenchement, en cas de détection dudit seuil de déclenchement, et
∘ un indicateur de confirmation, en cas de détection dudit seuil de confirmation,
- un module de mesure du temps (43) délivrant un indicateur d'expiration lorsqu'une période prédéterminée est écoulée,
- un module de contrôle (44) comprenant :
∘ des moyens de réception (441) dudit indicateur de déclenchement et d'au moins un desdits indicateurs de confirmation ou d'expiration,
∘ des moyens de génération et de transmission (442) audit module d'acquisition :
▪ d'une première information représentative d'un ordre de déclenchement, et
▪ d'une deuxième information représentative d'un ordre de traitement de données ou d'un ordre de réinitialisation,
lesdites première et deuxième informations étant générées en fonction desdits indicateurs reçus par lesdits moyens de réception,
**caractérisé en ce que** ledit module de détection comprend un discriminateur d'énergie (64) présentant une gigue inférieure ou égale à 10 psᵣₘₛ et un temps de latence inférieur ou égal à 1 ns.

2. Circuit électronique selon la revendication 1, **caractérisé en ce que** lesdits moyens de génération et de transmission (442) prennent en compte au moins une des règles suivantes :
- génération et transmission d'une première information représentative d'un ordre de déclenchement en présence dudit indicateur de déclenchement,
- génération et transmission d'une deuxième information représentative d'un ordre de traitement de données en présence dudit indicateur de confirmation,
- génération et transmission d'une deuxième information représentative d'un ordre de réinitialisation en présence dudit indicateur d'expiration et en absence dudit indicateur de confirmation.

3. Circuit électronique selon la revendication 1, **caractérisé en ce que** ledit module de détection comprend en outre un amplificateur (62) et un filtre (63) présentant un temps de montée inférieur ou égal à 50 ns.

4. Circuit électronique selon l'une quelconque des revendications précédentes, **caractérisé en ce que** ledit module de mesure du temps comprend un discriminateur de temps (60) réarmable et configuré pour détecter ladite période prédéterminée.

5. Circuit électronique selon la revendication 4, **caractérisé en ce qu'**il comprend en outre des moyens de réglage (431) de ladite période prédéterminée.

6. Circuit électronique selon la revendication 5, **caractérisé en ce que** lesdits moyens de réglage (431) de ladite période prédéterminée tiennent compte d'au moins une information représentative d'un cristal de scintillation mis en œuvre par ledit dispositif de détection de photons.

7. Circuit électronique selon l'une quelconque des revendications 4 à 6, **caractérisé en ce que** ledit module de mesure de temps (43) comprend en outre un amplificateur (61) configuré pour délivrer une résolution temporelle prédéterminée.

8. Circuit électronique selon l'une quelconque des revendications précédentes, **caractérisé en ce que** ledit module de contrôle (44), est une machine d'état, ou met en œuvre une logique combinatoire.

9. Module d'acquisition de données d'un dispositif de détection de photons, ledit module d'acquisition étant configuré pour être contrôlé par un circuit électronique selon l'une quelconque des revendications 1 à 8,
**caractérisé en ce que** ledit module d'acquisition comprend :
- des moyens de réception (51) :
▪ d'une première information représentative d'un ordre de déclenchement, et
▪ d'une deuxième information représentative d'un ordre de traitement de données ou d'un ordre de réinitialisation,
- une mémoire tampon (52) configurée pour stocker des données analogiques pendant une période de temps délimitée par :
∘ l'instant de réception dudit ordre de déclenchement, et
∘ l'instant de réception dudit ordre de traitement de données ou l'instant de réception dudit ordre de réinitialisation,
l'instant de réception dudit ordre de déclenchement précédant l'un desdits instants de réception dudit ordre de traitement de données ou dudit ordre de réinitialisation,
- des moyens de traitement (54) de données mettant en œuvre une conversion desdites données analogiques stockées dans ladite mémoire tampon en données numériques lorsque ladite deuxième information reçue par lesdits moyens de réception est représentative d'un ordre de traitement de données,
- des moyens de réinitialisation (53) de ladite mémoire tampon mettant en œuvre une suppression des données analogiques stockées dans ladite mémoire tampon, lorsque ladite deuxième information reçue par lesdits moyens de réception est représentative d'un ordre de réinitialisation.

10. Procédé de contrôle d'un module d'acquisition de données d'un dispositif de détection de photons, ledit procédé étant mis en œuvre au sein d'un circuit électronique comprenant un module de réception d'un signal mesuré par ledit dispositif de détection de photons, ledit procédé comprend :
- au moins une étape de détection (81) d'au moins un seuil d'énergie parmi au moins deux seuils d'énergie dudit signal, dits seuil de déclenchement et seuil de confirmation respectivement, ledit seuil de confirmation étant strictement supérieur audit seuil de déclenchement, ladite étape de détection délivrant :
∘ un indicateur de déclenchement, en cas de détection dudit seuil de déclenchement, et
∘ un indicateur de confirmation, en cas de détection dudit seuil de confirmation,
- une étape de mesure du temps (82) délivrant un indicateur d'expiration lorsqu'une période prédéterminée est écoulée,
- une étape de contrôle (83) comprenant :
∘ la réception (8301) dudit indicateur de déclenchement et d'au moins un desdits indicateurs de confirmation ou d'expiration,
∘ la génération et la transmission (8302) audit module d'acquisition :
▪ d'une première information représentative d'un ordre de déclenchement, et
▪ d'une deuxième information représentative d'un ordre de traitement de données ou d'un ordre de réinitialisation,
lesdites première et deuxième informations étant générées en fonction desdits indicateurs reçus lors de ladite réception,
**caractérisé en ce que** ladite étape de détection met en oeuvre une discrimination d'énergie présentant une gigue inférieure ou égale à 10 psᵣₘₛ et un temps de latence inférieur ou égal à 1 ns.

11. Procédé de contrôle selon la revendication 10, **caractérisé en ce que** ladite génération et transmission (8302) prend en compte au moins une des règles suivantes :
- génération et transmission d'une première information représentative d'un ordre de déclenchement en présence dudit indicateur de déclenchement,
- génération et transmission d'une deuxième information représentative d'un ordre de traitement de données en présence dudit indicateur de confirmation,
- génération et transmission d'une deuxième information représentative d'un ordre de réinitialisation en présence dudit indicateur d'expiration et en absence dudit indicateur de confirmation.

12. Procédé de contrôle selon l'une quelconque des revendications 10 et 11, **caractérisé en ce que** ladite étape de mesure du temps (82) est mise en œuvre dès que ledit indicateur de déclenchement est délivré.

13. Procédé de contrôle selon l'une quelconque des revendications 10 à 12, **caractérisé en ce que** ladite étape de mesure de temps (82) comprend une étape préalable de réglage (821) de ladite période prédéterminée.

14. Programme d'ordinateur comportant des instructions de code de programme pour l'exécution des étapes du procédé de contrôle d'un module d'acquisition de données d'un dispositif de détection de photons selon l'une quelconque des revendications 10 à 13 lorsque ledit programme est exécuté par un ordinateur.

## Patentansprüche

1. Elektronische Schaltung zum Steuern eines Datenerfassungsmoduls für eine Photonendetektionsvorrichtung,
wobei die elektronische Schaltung ein Modul (41) zum Empfang eines von der Photonendetektionsvorrichtung gemessenen Signals aufweist, die weiterhin umfasst:
- ein Modul (42) zur Detektion von wenigstens einem Energieschwellenwert von wenigstens zwei Energieschwellenwerten des Signals, die als Auslöseschwellenwert bzw. Bestätigungsschwellenwert bezeichnet werden, wobei der Bestätigungsschwellenwert grundsätzlich höher ist als der Auslöseschwellenwert, wobei das Modul zur Detektion bereitstellt:
∘ einen Auslöseindikator im Falle der Detektion des Auslöseschwellenwerts, und
∘ einen Bestätigungsindikator im Falle der Detektion des Bestätigungsschwellenwerts,
- ein Zeitmessmodul (43), das einen Ablaufindikator bereitstellt, wenn eine vorbestimmte Zeitdauer abgelaufen ist,
- ein Steuerungsmodul (44), das umfasst:
∘ Mittel (441) zum Empfang des Auslöseindikators und von wenigstens einem von dem Bestätigungs- oder dem Ablaufindikator,
∘ Mittel (442) zum Erzeugen und zum Übertragen an das Erfassungsmodul von:
▪ einer ersten Information, die einen Auslösebefehl darstellt und
▪ einer zweiten Information, die einen Datenverarbeitungsbefehl oder einen Reinitialisierungsbefehl darstellt,
wobei die erste und die zweite Information abhängig von den Indikatoren erzeugt werden, die von den Mitteln zum Empfang empfangen wurden,
**dadurch gekennzeichnet, dass** das Modul zur Detektion einen Energiediskriminator (64) umfasst, der einen Jitter von kleiner oder gleich 10 psᵣₘₛ und eine Latenzzeit von kleiner oder gleich 1 ns aufweist.

2. Elektronische Schaltung nach Anspruch 1, **dadurch gekennzeichnet, dass** die Mittel (442) zum Erzeugen und zum Übertragen wenigstens eine der folgenden Regeln berücksichtigen:
- Erzeugung und Übertragung einer ersten Information, die bei Vorhandensein des Auslöseindikators einen Auslösebefehl darstellt,
- Erzeugung und Übertragung einer zweiten Information, die bei Vorhandensein des Bestätigungsindikators einen Datenverarbeitungsbefehl darstellt,
- Erzeugung und Übertragung einer zweiten Information, die bei Vorhandensein des Ablaufindikators und bei Abwesenheit des Bestätigungsindikators einen Reinitialisierungsbefehl darstellt.

3. Elektronische Schaltung nach Anspruch 1, **dadurch gekennzeichnet, dass** das Modul zur Detektion darüber hinaus einen Verstärker (62) und einen Filter (63) umfasst, die eine Anstiegszeit von weniger oder gleich 50 ns aufweisen.

4. Elektronische Schaltung nach einem der vorstehenden Ansprüche, **dadurch gekennzeichnet, dass** das Zeitmessmodul einen zurücksetzbaren Zeitdiskriminator (60) umfasst, der dazu eingerichtet ist, um die vorbestimmte Zeitdauer zu erfassen.

5. Elektronische Schaltung nach Anspruch 4, **dadurch gekennzeichnet, dass** sie außerdem Mittel (431) zur Einstellung der vorbestimmten Zeitdauer umfasst.

6. Elektronische Schaltung nach Anspruch 5, **dadurch gekennzeichnet, dass** die Mittel (431) zur Einstellung der vorbestimmten Zeitdauer wenigstens eine Information berücksichtigen, die für einen von der Photonendetektionsvorrichtung verwendeten Szintillationskristall repräsentativ ist.

7. Elektronische Schaltung nach einem der Ansprüche 4 bis 6, **dadurch gekennzeichnet, dass** das Zeitmessmodul (43) außerdem einen Verstärker (61) aufweist, der dazu eingerichtet ist, um eine vorbestimmte Zeitauflösung bereitzustellen.

8. Elektronische Schaltung nach einem der vorstehenden Ansprüche, **dadurch gekennzeichnet, dass** das Steuerungsmodul (44) eine Zustandsmaschine ist oder eine kombinatorische Logik implementiert.

9. Datenerfassungsmodul einer Photonendetektionsvorrichtung, wobei das Erfassungsmodul dazu eingerichtet ist, um von einer elektronischen Schaltung nach einem der Ansprüche 1 bis 8 gesteuert zu werden,
**dadurch gekennzeichnet, dass** das Erfassungsmodul aufweist:
- Mittel (51) zum Empfang von:
∘ einer ersten Information, die einen Auslösebefehl darstellt und
∘ einer zweiten Information, die einen Datenverarbeitungsbefehl oder einen Reinitialisierungsbefehl darstellt,
- einen Pufferspeicher (52), der dazu eingerichtet ist, analoge Daten während einer Zeitdauer zu speichern, die begrenzt ist von
∘ dem Empfangszeitpunkt des Auslösebefehls und
∘ dem Empfangszeitpunkt des Datenverarbeitungsbefehls oder dem Empfangszeitpunkt des Reinitialisierungsbefehls,
wobei der Empfangszeitpunkt des Auslösebefehls einem der Empfangszeitpunkte des Datenverarbeitungsbefehls oder des Reinitialisierungsbefehls vorausgeht,
- Mittel (54) zur Datenverarbeitung, die eine Umwandlung der in dem Pufferspeicher gespeicherten analogen Daten in digitale Daten implementieren, wenn die zweite von den Mitteln zum Empfang empfangene Information einen Datenverarbeitungsbefehl darstellt,
- Mittel (53) zur Reinitialisierung des Pufferspeichers, die eine Löschung der in dem Pufferspeicher gespeicherten analogen Daten bewirken, wenn die zweite von den Mitteln zum Empfang empfangene Information einen Re-initialisierungsbefehl darstellt.

10. Verfahren zur Steuerung eines Datenerfassungsmoduls einer Photonendetektionsvorrichtung, wobei das Verfahren innerhalb einer elektronischen Schaltung ausgeführt wird, die ein Modul zum Empfang von einem von der Photonendetektionsvorrichtung gemessenen Signal aufweist, wobei das Verfahren umfasst:
- wenigstens einen Schritt zur Detektion (81) von wenigstens einem Energieschwellenwert von wenigstens zwei Energieschwellenwerten des Signals, die als Auslöseschwellenwert bzw. Bestätigungsschwellenwert bezeichnet werden, wobei der Bestätigungsschwellenwert grundsätzlich höher ist als der Auslöseschwellenwert, wobei der Schritt der Detektion bereitstellt:
∘ einen Auslöseindikator im Falle der Detektion des Auslöseschwellenwerts, und
∘ einen Bestätigungsindikator im Falle der Detektion des Bestätigungsschwellenwerts,
- einen Schritt zur Zeitmessung (82), der einen Ablaufindikator bereitstellt, wenn eine vorbestimmte Zeitdauer abgelaufen ist,
- einen Schritt der Steuerung (83), der umfasst:
∘ den Empfang (8301) des Auslöseindikators und von wenigstens einem von dem Bestätigungs- oder dem Ablaufindikator,
∘ die Erzeugung und die Übertragung (8302) an das Erfassungsmodul:
▪ einer ersten Information, die einen Auslösebefehl darstellt und
▪ einer zweiten Information, die einen Datenverarbeitungsbefehl oder einen Reinitialisierungsbefehl darstellt,
wobei die erste und die zweite Information abhängig von den Indikatoren erzeugt werden, die bei dem Empfang empfangen wurden,
**dadurch gekennzeichnet, dass** der Schritt zur Detektion eine Energiediskriminierung implementiert, die einen Jitter von kleiner oder gleich 10 psᵣₘₛ und eine Latenzzeit von kleiner oder gleich 1 ns aufweist

11. Steuerungsverfahren nach Anspruch 10, **dadurch gekennzeichnet, dass** die Erzeugung und Übertragung (8302) wenigstens eine der folgenden Regeln berücksichtigt:
- Erzeugung und Übertragung einer ersten Information, die bei Vorhandensein des Auslöseindikators einen Auslösebefehl darstellt,
- Erzeugung und Übertragung einer zweiten Information, die bei Vorhandensein des Bestätigungsindikators einen Datenverarbeitungsbefehl darstellt,
- Erzeugung und Übertragung einer zweiten Information, die bei Vorhandensein des Ablaufindikators und bei Abwesenheit des Bestätigungsindikators einen Reinitialisierungsbefehl darstellt.

12. Steuerungsverfahren nach einem der Ansprüche 10 und 11, **dadurch gekennzeichnet, dass** der Schritt der Zeitmessung (82) ausgeführt wird, sobald der Auslöseindikator bereitgestellt wird.

13. Steuerungsverfahren nach einem der Ansprüche 10 bis 12, **dadurch gekennzeichnet, dass** der Schritt der Zeitmessung (82) einen vorhergehenden Schritt der Einstellung (821) der vorbestimmten Zeitdauer umfasst.

14. Computerprogramm, das Programmcodeanweisungen umfasst zur Ausführung der Schritte des Steuerungsverfahrens eines Datenerfassungsmoduls einer Photonendetektionsvorrichtung nach einem der Ansprüche 10 bis 13, wenn das Programm von einem Computer ausgeführt wird.

## Claims

1. Electronic circuit which is configured to control a data acquisition module of a photon detection device,
the electronic circuit comprising a module (41) for receiving a signal measured by the photon detection device,
which further comprises:
- a module (42) for detecting at least one energy threshold from at least two energy thresholds of the signal, referred to as an actuation threshold and a confirmation threshold, respectively, the confirmation threshold being strictly greater than the actuation threshold, the detection module providing:
o an actuation indicator, in the case of detection of the actuation threshold, and
o a confirmation indicator, in the case of detection of the confirmation threshold,
- a time measurement module (43) which provides an expiry indicator when a predetermined time period has elapsed,
- a control module (44) comprising:
o receiving means (441) for the actuation indicator and at least one of the confirmation or expiry indicators,
o means (442) for generating and transmitting to the acquisition module:
• a first information item representative of an actuation instruction, and
• a second information item representative of a data processing instruction or a reinitialisation instruction,
the first and second information items being generated in accordance with the indicators received by the receiving means,
**characterised in that** the detection module comprises an energy discriminator (64) which has a jitter less than or equal to 10 psᵣₘₛ and a latency time less than or equal to 1 ns.

2. Electronic circuit according to claim 1, **characterised in that** the generating and transmitting means (442) take into account at least one of the following rules:
- generating and transmitting a first information item representative of an actuation instruction in the presence of the actuation indicator,
- generating and transmitting a second information item representative of a data processing instruction in the presence of the confirmation indicator,
- generating and transmitting a second information item representative of a reinitialisation instruction in the presence of the expiry indicator and in the absence of the confirmation indicator.

3. Electronic circuit according to claim 1, **characterised in that** the detection module further comprises an amplifier (62) and a filter (63) which has a rise time less than or equal to 50 ns.

4. Electronic circuit according to any one of the preceding claims, **characterised in that** the time measurement module comprises a time discriminator (60) which can be reset and which is configured to detect the predetermined period.

5. Electronic circuit according to claim 4, **characterised in that** it further comprises adjustment means (431) for the predetermined period.

6. Electronic circuit according to claim 5, **characterised in that** the adjustment means (431) for the predetermined period take into account at least one information item representative of a scintillation crystal which is used by the photon detection device.

7. Electronic circuit according to any one of claims 4 to 6, **characterised in that** the time measurement module (43) further comprises an amplifier (61) which is configured to provide a predetermined time resolution.

8. Electronic circuit according to any one of the preceding claims, **characterised in that** the control module (44) is a state machine or uses a combinational logic.

9. Data acquisition module of a photon detection device, the acquisition module being configured to be controlled by an electronic circuit according to any one of claims 1 to 8, **characterised in that** the acquisition module comprises:
- receiving means (51) for:
• a first information item representative of an actuation instruction, and
• a second information item representative of a data processing instruction or a reinitialisation instruction,
• a buffer memory (52) which is configured to store analogue data for a time period delimited by:
o the time at which the actuation instruction was received, and
o the time at which the data processing instruction was received or the time at which the reinitialisation instruction was received,
the time at which the actuation instruction was received preceding one of the times at which the data processing instruction or the reinitialisation instruction was received,
- data processing means (54) carrying out a conversion of the analogue data stored in the buffer memory into digital data when the second information item received by the receiving means is representative of a data processing instruction,
- reinitialisation means (53) of the buffer memory carrying out a deletion of the analogue data stored in the buffer memory when the second information item received by the receiving means is representative of a reinitialisation instruction.

10. Control method for a data acquisition module of a photon detection device, the method being implemented within an electronic circuit comprising a module for receiving a signal measured by the photon detection device,
the method comprises:
- at least one step (81) of detecting at least one energy threshold from at least two energy thresholds of the signal, referred to as an actuation threshold and confirmation threshold, respectively, the confirmation threshold being strictly greater than the actuation threshold, the detection step providing:
o an actuation indicator, in the event of detection of the actuation threshold, and
o a confirmation indicator, in the event of detection of the confirmation threshold,
- a time measurement step (82) providing an expiry indicator when a predetermined time period has elapsed,
- a control step (83) comprising:
o receiving (8301) the actuation indicator and at least one of the confirmation or expiry indicators,
o generating and transmitting (8302) to the acquisition module:
• a first information item representative of an actuation instruction, and
• a second information item representative of a data processing instruction or a reinitialisation instruction,
the first and second information items being generated in accordance with the indicators received during receiving, **characterised in that** the detection step implements an energy discrimination which has a jitter less than or equal to 10 psᵣₘₛ and a latency time less than or equal to 1 ns.

11. Control method according to claim 10, **characterised in that** the generation and transmission (8302) takes into account at least one of the following rules:
- generating and transmitting a first information item representative of an actuation instruction in the presence of the actuation indicator,
- generating and transmitting a second information item representative of a data processing instruction in the presence of the confirmation indicator,
- generating and transmitting a second information item representative of a reinitialisation instruction in the presence of the expiry indicator and in the absence of the confirmation indicator.

12. Control method according to either claim 10 or claim 11, **characterised in that** the time measurement step (82) is implemented as soon as the actuation indicator is supplied.

13. Control method according to any one of claims 10 to 12, **characterised in that** the time measurement step (82) comprises a prior step (821) for adjusting the predetermined time period.

14. Computer programme comprising programme code instructions for executing steps of the control method of a data acquisition module of a photon detection device according to any one of claims 10 to 13 when the programme is executed by a computer.
